(19) **Europäisches Patentamt / European Patent Office / Office européen des brevets**

(11) **EP 1 551 932 B1**

(12) **FASCICULE DE BREVET EUROPEEN**

(45) Date de publication et mention
de la délivrance du brevet:
**26.06.2013 Bulletin 2013/26**

(21) Numéro de dépôt: **03780218.8**

(22) Date de dépôt: **13.10.2003**

(51) Int Cl.:
**C09G 1/00** (2006.01)

(86) Numéro de dépôt international:
**PCT/FR2003/003012**

(87) Numéro de publication internationale:
**WO 2004/035702 (29.04.2004 Gazette 2004/18)**

(54) **ECRAN DE VISUALISATION SUSCEPTIBLE D ETRE SOUMIS A UNE PROCE DURE DE DEFILEMENT.**

BILDSCHIRM MIT BILDVERSCHIEBUNGSMÖGLICHKEITEN

DISPLAY SCREEN CAPABLE OF BEING SUBJECTED TO A SCROLL PROCEDURE

(84) Etats contractants désignés:
**DE ES FR GB IT TR**

(30) Priorité: **16.10.2002 FR 0212859**

(43) Date de publication de la demande:
**13.07.2005 Bulletin 2005/28**

(73) Titulaire: **Thomson Licensing
92130 Issy-les-Moulineaux (FR)**

(72) Inventeur: **VILLERS, Jean Stéphane
F-95800 Cergy Pontoise (FR)**

(74) Mandataire: **Ruellan-Lemonnier, Brigitte et al
Technicolor
European Patent Operations
1-5 Rue Jeanne d'Arc
92443 Issy-les-Moulineaux Cedex (FR)**

(56) Documents cités:
**EP-A- 0 403 416     EP-A- 1 055 993
EP-A2- 0 235 594     US-A- 4 920 504**

Remarques:
Le dossier contient des informations techniques
présentées postérieurement au dépôt de la demande
et ne figurant pas dans le présent fascicule.

Printed by Jouve, 75001 PARIS (FR)

**Description**

**DOMAINE TECHNIQUE**

La présente invention concerne un procédé d'affichage d'un document, par exemple une page HTML ("Hypertext mark-up language"), sur un écran de visualisation susceptible d'être soumis à une procédure de défilement ("scrolling"), par exemple sur un écran de télévision numérique.

**ETAT DE LA TECHNIQUE ANTERIEURE**

Le domaine de l'invention est notamment celui de l'affichage de pages HTML, comme décrit dans la demande de brevet EP 1 164 499.

Une version de la norme HTML ("HTML 4.01 Specification W3C Recommendation 24 décembre 1999") peut être trouvée à l'adresse Internet suivante http://www.w3.org/TR/1999/REC-htmT401-1999 1224

Une page HTML est un document qui peut être interprété par un programme de lecture pour produire une sortie visuelle, et éventuellement audio, sur un moniteur d'ordinateur ou sur un écran de télévision. Une page HTML présentée sur un écran est constituée habituellement d'un document principal et de documents secondaires pouvant contenir des éléments graphiques, sonores ou du code source.

Afin de tenir compte de cette page HTML, ces éléments sont chargés, stockés en mémoire et traités par un moteur HTML. La représentation de cette page est stockée dans une mémoire graphique pour affichage.

Un moteur HTML est une application interactive permettant de visualiser des documents hypertexte et multimédia accessibles au travers du réseau Internet. Il permet également d'envoyer et de recevoir du courrier électronique et de consulter des serveurs dits "news".

Dans le domaine de la télévision numérique une telle application interactive est pilotée par l'utilisateur au moyen d'une télécommande ou à l'aide d'un clavier infrarouge. L'application peut, en effet, intégrer une interface de substitution permettant à l'utilisateur d'effectuer toutes les saisies de texte ou autres avec seulement la télécommande. L'affichage des documents est réalisé sur l'écran.

La récupération des documents sur le réseau Internet s'effectue par l'intermédiaire de requêtes sur des serveurs particuliers. Dans le domaine de la télévision numérique cette opération peut être asymétrique. En effet, la requête et le document ne transitent pas nécessairement par le même milieu : La requête peut être effectuée par le réseau téléphonique via un modem, et le document revenir soit par l'antenne, c'est-à-dire par émission du satellite, soit par le modem. L'utilisateur peut alors choisir le type de retour.

Le contenu d'une page HTML peut excéder l'espace disponible sur le moniteur ou sur l'écran de télévision. Dans ce cas le moniteur ou l'écran de télévision n'affiche qu'une partie de la page HTML. L'utilisateur peut alors faire défiler l'affichage pour avoir un aperçu des parties restantes de la page HTML.

Après défilement, la nouvelle partie visible du document HTML doit être affichée. Chaque élément graphique en intersection avec la nouvelle partie visible doit être dessiné ou redessiné.

Le défilement d'un document est couramment réalisé de plusieurs façons. La manière la plus simple est l'affichage sans préparation préalable dans une mémoire graphique tampon, c'est à dire en dessinant directement dans la fenêtre affichée à l'écran. En cas de défilement du document, le contenu de la fenêtre restant toujours visible est déplacé par une copie massive à sa nouvelle position dans la fenêtre. La bande restante, nouvellement apparue, est affichée en redessinant individuellement chaque objet graphique. Ce procédé a comme inconvénient, lorsque le système graphique est lent, de voir se composer progressivement le dessin de chacun des objets graphiques.

Pour remédier à ce problème, une solution utilisée est de préparer la partie du document à afficher dans une mémoire graphique tampon comme par exemple un pixmap et d'afficher en une fois le contenu de ce pixmap dans la fenêtre visible. Ici deux techniques sont utilisées. La première consiste à ne couvrir par cette mémoire tampon que la zone visible du document. Dans ce cas, lorsqu'un défilement est demandé la nouvelle portion visible du document est préparée dans la mémoire tampon et lorsque celle-ci est prête, elle est affichée (technique appelée "double-buffering"). La seconde consiste à couvrir l'intégralité du document avec une mémoire graphique tampon, de préparer l'intégralité du document et de l'afficher au fur et à mesure des besoins.

Les problèmes majeurs de ces deux techniques sont que, pour la première, l'affichage est préparé sur demande explicite de défilement. Par conséquent, entre la demande et le défilement effectif il peut se passer un certain temps désagréable pour l'utilisateur, le défilement n'étant pas fluide. Pour la seconde, si le problème de temps d'attente n'existe pas, elle peut nécessiter une grande quantité de mémoire graphique puisque celle-ci est liée à la taille de documents. Sur le réseau internet, la taille des documents n'est pas limitée et la quantité de mémoire graphique nécessaire pour utiliser cette seconde technique peut être considérable.

Une telle solution n'est pas, non plus, adaptée à l'affichage d'un décodeur parce que celui-ci nécessite une mémoire importante pour stocker les données pixmap qui sont calculées avant l'affichage.

EP 1 551 932 B1

Or, la capacité mémoire d'un décodeur de télévision est limitée. Elle est par exemple de l'ordre de 2 mégaoctets de mémoire graphique. Elle est donc nettement plus limitée que celle d'un ordinateur qui peut être de 32 mégaoctets, ou 64 mégaoctets...

Il a aussi été proposé dans le brevet US-A-4920504 un dispositif de gestion d'affichage comprenant une mémoire d'affichage et un contrôleur de mémoire d'affichage pour afficher une zone sélectionnée d'une donnée image en faisant défiler la zone sélectionnée sur la donnée image. L'invention a pour objectif de proposer un procédé gérant l'affichage d'un document tel qu'une page HTML permettant un défilement fluide du document dans un contexte de mémoire limitée.

EXPOSE DE L'INVENTION

La présente invention concerne un procédé d'affichage défini dans la revendication 1.

Avantageusement en cas de défilement horizontal et vertical, les bandes d'anticipation comportent au minimum une colonne de pixmaps à droite et à gauche de la fenêtre visible ainsi qu'une ligne de pixmaps en bas et en haut, sauf dans le cas ou la fenêtre visible approche le bord du document. Les pixmaps sont découpés en rectangles qui sont dessinés successivement à chaque appel d'une tache de fond.

Le remplissage d'un pixmap s'il est de grande taille peut être long et bloquer le système le temps de l'opération. Le remplissage des pixmaps par rectangles de petites tailles permet de diluer l'opération de remplissage parmi les autres traitements du système, et pouvoir répondre rapidement à l'utilisateur si nécessaire.

La tache de fond a également pour fonction de construire la zone d'anticipation.

A chaque appel de cette tache de fond, le processus est le suivant :

- réorganisation éventuelle des pixmaps si un défilement a été effectué,
- s'il n'y a pas eu de repositionnement des pixmaps, dessin du premier rectangle d'un pixmap déterminé en fonction d'un critère d'éloignement de la zone visible du document

Avantageusement le procédé de l'invention utilise un mécanisme de synchronisation permettant le forçage éventuel des données à afficher dans les pixmaps.

Un dessin immédiat est réalisé dans deux cas :

- lorsqu'un événement "expose" oblige à dessiner une partie de la fenêtre d'affichage alors que cette partie n'est pas encore dessinée dans les bandes d'anticipation,
- lorsqu'un élément du document est modifié graphiquement dans la fenêtre d'affichage.

Le procédé de l'invention peut être notamment utilisé pour l'affichage d'un document HTML, et/ou pour un décodeur de télévision numérique.

**BRÈVE DESCRIPTION DES DESSINS**

La figure 1 illustre la visualisation de la zone d'anticipation selon le procédé de l'invention.
La figure 2 illustre un exemple de déplacement de la zone d'anticipation.
La figure 3 illustre le mécanisme de synchronisation, lorsqu'une partie des pixmaps n'est pas remplie et qu'un affichage est demandé.
La figure 4 illustre la constitution d'une arborescence de sous-fenêtres dans un exemple de mise en oeuvre du procédé de l'invention.
La figure 5 illustre l'affichage de l'arborescence représentée sur la figure 4.
Les figures 6 et 7 illustrent, chacune, un document HTML après mise en page selon le procédé de l'invention ; la largeur complète du document pouvant être couverte avec les pixmaps pour la figure 7, alors que pour la figure 6 ce n'est pas possible.

**EXPOSÉ DÉTAILLÉ DE MODES DE RÉALISATION PARTICULIERS**

Le procédé, selon l'invention, d'affichage d'un document, par exemple une page HTML, sur un écran de visualisation susceptible d'être soumis à une procédure de défilement consiste à découper ce document en zones pouvant être couvertes par des pixmaps dont la taille est fonction de la taille de la zone de visualisation, et à prévoir une zone d'anticipation partie du document réellement couverte par des pixmaps.

Cette zone d'anticipation forme une matrice de pixmaps, couvrant du document, la partie visible et les bandes les plus proches autour de cette partie visible, de manière à préparer le contenu de la partie visible et les zones prochainement visibles en cas de défilement du document.

La zone d'anticipation a comme finalité d'améliorer le rendu visuel des opérations de redessin d'une partie du document. En effet, dans la plupart des cas, une copie de la zone d'anticipation dans la fenêtre d'affichage s'avère suffisante.

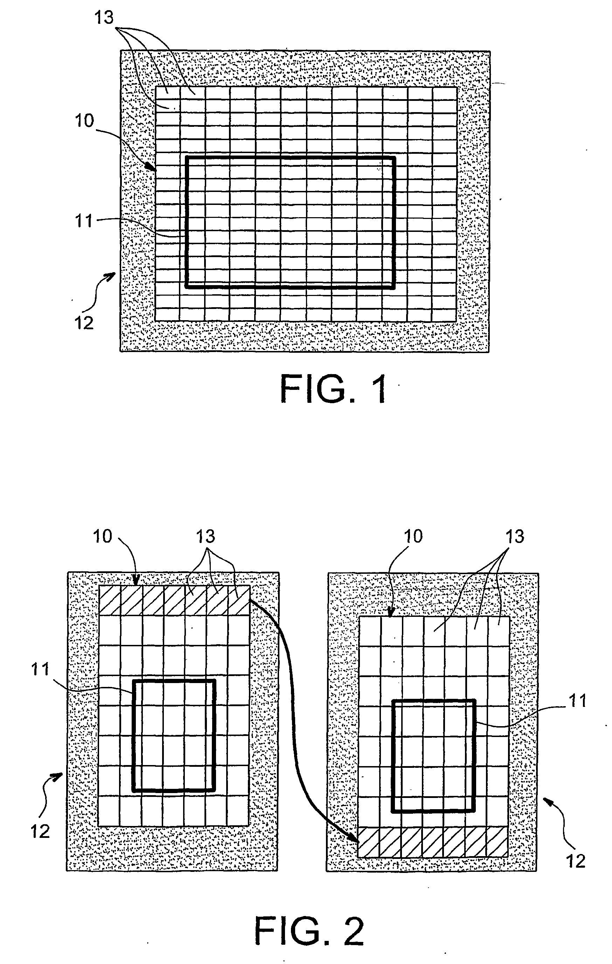

La figure 1 représente une telle zone d'anticipation 10, formée ici de 18 lignes et 12 colonnes de pixmaps 13, la fenêtre visible 11 où le document 12 est visualisé.

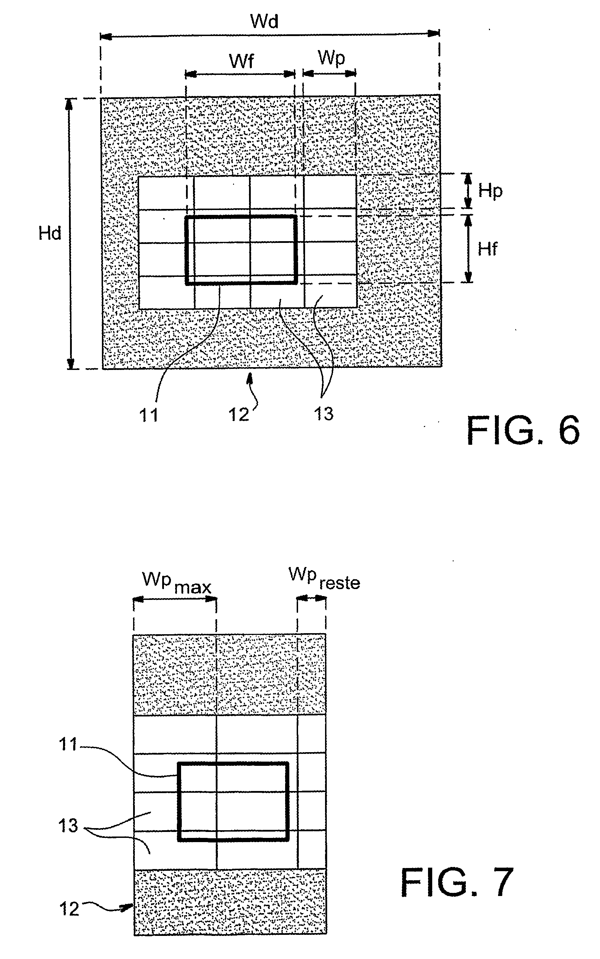

On constate l'inclusion hiérarchique des trois zones ainsi formées, le document 12 incluant la zone d'anticipation 10, cette dernière contenant la fenêtre visible 11 du document. La zone d'anticipation peut très bien recouvrir en largeur ou en hauteur le document si l'espace disponible est suffisant, comme le montre l'illustration de la figure 7.

La figure 2 montre l'évolution de la zone d'anticipation 10 suite à une opération de défilement de l'affichage du document 12 vers le bas. Cette opération de défilement entraîne un déplacement de la première ligne en bas de la zone d'anticipation. Cette ligne doit alors être redessinée.

La zone d'anticipation comporte au minimum une colonne de zones pixmap à droite et à gauche de la fenêtre visible ainsi qu'une ligne de zones pixmap en bas et en haut, sauf dans le cas ou la fenêtre visible 11 approche le bord du document 12. Si cette règle n'est pas respectée à la suite d'un défilement, la zone d'anticipation se déplace de manière à rétablir celle-ci.

Pour ne pas risquer de bloquer l'application pendant plusieurs secondes, le dessin de la zone d'anticipation, suite à sa création ou à un défilement, est tel qu'une tache de fond effectue ce dessin en plusieurs étapes : les zones pixmaps sont formées en rectangles qui sont dessinés successivement à chaque appel de la tache de fond.

Cette tache de fond a également pour fonction de construire la zone d'anticipation.

A chaque appel de cette tache de fond, le processus est le suivant :

- déplacement si nécessaire de la zone d'anticipation par permutation de lignes ou de colonnes en pixmaps,
- si la zone d'anticipation est correctement positionnée, dessin du premier rectangle d'un pixmap de la zone d'anticipation.

Si le pixmap à afficher n'est pas prêt au moment de l'affichage, un mécanisme de synchronisation permet de forcer le rafraîchissement des données à afficher dans les pixmaps.

Un dessin immédiat est réalisé dans deux cas :

- lorsqu'un événement "expose" oblige à dessiner une partie de la fenêtre d'affichage alors que cette partie n'est pas encore dessinée dans la zone d'anticipation,
- lorsqu'un élément du document est modifié graphiquement dans la fenêtre d'affichage.

Ces deux cas correspondent respectivement à un afflux de nouvelles données concernant une image et au traitement du focus qui modifie le dessin d'un élément de l'image.

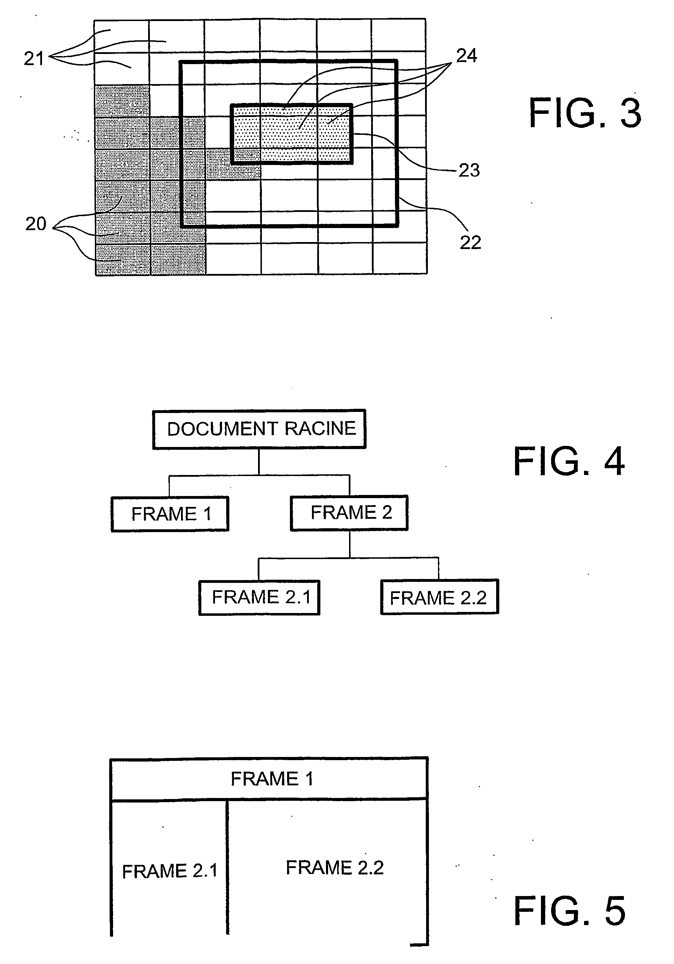

Dans ces deux cas tous les rectangles en attente ayant une intersection commune avec la zone à dessiner sont dessinés. La figure 3 représente les éléments qui composent alors la zone d'anticipation :

- les rectangles déjà dessinés 20,
- les rectangles non dessinés 21,
- la fenêtre d'affichage 22,
- le rectangle 23 à dessiner suite à un événement "expose",
- les rectangles non dessinés 24 qui sont en interéaction avec le rectangle 23, le dessin de leur contenu étant forcé par la synchronisation.

Mise en oeuvre du procédé de l'invention dans une application HTML

On va, à présent, considérer un exemple de mise en oeuvre du procédé de l'invention, dans une application HTML dans un décodeur.

La première opération consiste à répartir la mémoire graphique utilisable dans une arborescence de sous-fenêtres (ou "frames" HTML).

La quantité de mémoire graphique disponible pour créer les pixmaps est limitée au niveau du décodeur. Pour garantir un bon fonctionnement des autres applications fonctionnant en même temps que le moteur HTML, seule une partie de cette mémoire est utilisée par le moteur HTML pour créer les zones d'anticipation. La quantité de mémoire disponible est définie au lancement du moteur HTML. Dans le cas où plusieurs documents déroulants sont visibles simultanément à l'écran (cas des sous-fenêtres ou "frames" HTML), il faut que chaque document puisse profiter du mécanisme de déroulement fluide que constitue le procédé de l'invention. La quantité de mémoire disponible doit donc être répartie sur tous les documents visibles simultanément.

Le procédé de l'invention ne concerne que des documents déroulants. Les documents déclarant des sous-fenêtres HTML ne peuvent jamais être déroulants. Seuls les documents feuilles d'une arborescence de sous-fenêtres sont susceptibles d'être déroulants, et sont donc utilisateurs potentiels du procédé de l'invention. Ainsi, la somme des parties visibles des documents HTML susceptible d'être déroulante couvre exactement la surface réservée à l'affichage du moteur HTML. Cette propriété est utilisée pour garantir une utilisation du procédé de l'invention pour chaque document feuille.

Le moteur HTML répartit proportionnellement la mémoire graphique, en fonction de la surface de chaque sous-fenêtre :

- *M* représente la quantité de mémoire graphique réservée au moteur HTML,
- *Wm* & *Hm* : la taille en pixels de la fenêtre d'affichage du moteur HTML,
- *Wf* & *Hf* : la taille en pixels d'une sous-fenêtre quelconque.

La quantité de mémoire graphique utilisable par cette sous-fenêtre pour créer ses zones d'anticipation est proportionnelle à la surface :

$$Mf = M*(Wf*Hf)/(Wm*Hm)$$

Un exemple d'arborescence de sous-fenêtre, dans laquelle chaque case constitue un document HTML, est illustré sur la figure 4. On a ainsi un document racine, par exemple de 600 x 400 pixels, dont découle un document Frame 1, par exemple de 600 x 100 pixels, et un document Frame 2, par exemple de 600 x 300 pixels, dont découle un document Frame 2-1, par exemple de 200 x 300 pixels et un document Frame 2-2, par exemple de 400 x 300 pixels.

L'affichage d'une telle arborescence donne le résultat illustré sur la figure 5.

Dans un tel exemple la répartition de la mémoire graphique peut être réalisée de la façon suivante, avec, *M* = 1.920 Koctets :

- Document racine (déclaration de frames)= 0 octet
- "Frame 1" (document feuille)= 480 Koctets
- "Frame 2" (déclaration de "frames")= 0 octet
- "Frame 2.1" (document feuille)= 480 Koctets
- "Frame 2.2" (document feuille)= 960 Koctets

L'opération suivante est un problème de détermination de granularité des pixmaps : pour une quantité de mémoire graphique disponible pour un document il faut déterminer quelle est la taille et la granularité des pixmaps qui va permettre le bon fonctionnement du système. L'objectif est de garantir au moins un pas de défilement, d'anticipation du mouvement de part et d'autre de la zone visible, et d'avoir au moins une rangée de pixmaps pouvant être déplacée d'un côté ou de l'autre.

La figure 6 représente un document HTML 12 complet après la mise en page, la partie couverte par les pixmaps 13 et la partie visible 11. Ce document 12 est susceptible à la fois d'avoir un défilement horizontal et un défilement vertical.

Sur cette figure sont représentés les paramètres suivants :

- *Wd* & *Hd :* largeur et hauteur en pixels du document complet après mise en page,
- *Wf* & *Hf :* largeur et hauteur en pixels de la partie visible du document (taille de la sous-fenêtre),
- *Wp* & *Hp* : largeur et hauteur en pixels d'un pixmap,

Il existe d'autres paramètres non représentés sur cette figure :

- *Nx* & *Ny* : nombre de pixmaps en horizontal ou en vertical,
- *Px* & *Py* : bande d'anticipation garantie disponible en horizontal et en vertical de part et d'autre de la zone visible (cette bande d'anticipation correspond, au minimum, au pas de défilement),
- *T* : taille d'un pixel en octets (fonction du système de codage des couleurs),
- *Mf* : quantité de mémoire graphique disponible pour les pixmaps associés au document.

On considère tout d'abord que le document 12 peut être déroulé horizontalement et verticalement et que la quantité de mémoire graphique est insuffisante pour couvrir l'intégralité de celui-ci avec des pixmaps aussi bien en horizontal qu'en vertical.

Pour pouvoir garantir à la fois la permutation des pixmaps et l'existence d'une bande d'anticipation garantie de chaque côté, on doit respecter les inégalités suivantes :

$$2 \ Px \ + \ Wf \ \leq \ Wp \ (Nx-1)+1 \qquad (1)$$

avec Nx > 1

$$2 \ Py \ + \ Hf \ \leq \ Hp \ (Ny-1)+1 \qquad (2)$$

avec Ny > 1

La limitation mémoire impose également une contrainte. La somme des pixmaps ne doit pas dépasser la quantité de mémoire réservée :

$$Mf \ \geq \ Nx*Ny*Wp*Hp*T \qquad (3)$$

Le nombre d'équations est encore insuffisant pour déterminer le nombre et la taille des pixmaps. Aussi, on opte pour certaines conditions particulières :

- $Px,$ la zone d'anticipation horizontale garantie, est définie comme égale au pas de défilement horizontal.
- $Py,$ la zone d'anticipation verticale garantie, est définie comme égale au pas de défilement vertical.
- $Px = \alpha \ Wf$ : le pas horizontal de défilement est proportionnel à la largeur d'affichage du document.
- $Py = \alpha \ Hf$ : le pas vertical de défilement est proportionnel à la hauteur d'affichage du document avec $0 < \alpha c \leq 1$, $\alpha$ étant une constante du moteur HTML (contrainte garantissant que l'intégralité du document peut être consulté par un déroulement pas à pas).

$$(Wp*Nx)*Hf \ = \ (Hp*Ny)*Wf \qquad (4)$$

: les dimensions de la zone d'anticipation sont proportionnelles aux dimensions de la zone d'affichage.

On détermine la taille et le nombre de pixmaps en horizontal en utilisant les équations (3) et (4) et en considérant que la capacité maximum de la mémoire graphique doit être utilisée. On obtient le résultat suivant :

$$W_p*Nx \ = \ ((Mf*Wf)/(Hf*T))^{1/2} \qquad (5)$$

où $Wp*Nx$ correspond à la largeur en pixel de la zone d'anticipation.

En utilisant les équations (1) et (5), on obtient la largeur maximum d'un pixmap :

$$W_{pmax} \ = \ ((Mf*Wf)/(Hf*T))^{1/2}+1-(2 \ \alpha \ +1)Wf$$

En divisant la largeur de la zone d'anticipation $(Wp*Nx)$ de (5) par la largeur maximum d'un pixmap $Wp_{max}$ et en arrondissant à la valeur entière supérieure, on obtient le nombre de zones pixmap minimum en largeur $Nx_{min}$.

Pour toute les valeurs de $Nx \geq Nx_{min}$, le bon fonctionnement du procédé de l'invention est assuré. Dans la mise en oeuvre du moteur HTML, c'est la valeur $Nx_{min}$ qui est retenue pour le découpage. En effet, au niveau du décodeur, le nombre de pixmaps pouvant être créé est limité. On garantit ainsi au maximum la possibilité d'utiliser le procédé de l'invention et on évite donc d'atteindre une telle valeur critique.

La largeur réelle d'un pixmap $Wp$ est obtenue en divisant la largeur de la zone d'anticipation $(WP*Nx)$ de (5) par le nombre de pixmaps retenu $Nx_{min}$ arrondi au nombre entier inférieur.

Dans l'exemple de la "Frame 2.2", en prenant un coefficient $\alpha$ à 10% et T = 4 octets, les résultats obtenus sont les suivants :

- **Nx** = 7
- **Wp** = 80 pixels

La détermination de la taille et du nombre de pixmaps en vertical est réalisée de la même façon qu'en horizontal.
Dans l'exemple considéré, les résultats obtenus pour "Frame 2.2" sont les suivants :

- **Ny** = 7
- **Hp** = 60 pixels

Avec cette méthode de calcul, la granularité des pixmaps est toujours la même en horizontal et en vertical.
Dans la mise en oeuvre du décodeur, il faut tenir compte d'un paramètre supplémentaire : les pixmaps créés doivent toujours avoir des dimensions multiples de 8 pixels. Par conséquent, après avoir déterminé la taille de chaque pixmap et le nombre de pixmaps dans une direction, en arrondissant cette taille au multiple de 8 inférieur, on vérifie que l'équation (1) ou (2) selon la première direction traitée) est toujours validée. Si ce n'est plus le cas, il faut augmenter de 1 la granularité des pixmaps et recalculer la nouvelle taille d'un pixmap.
Avec ces arrondis, une partie de la mémoire réservée pour le calcul dans une direction peut n'être plus totalement utilisée. Ce trop plein de mémoire est alors reporté sur l'autre direction avant de calculer la taille et le nombre de pixmaps. Dans ces nouvelles conditions, la granularité horizontale et verticale peuvent devenir différente.
Comme illustré sur la figure 7, dans le cas ou **Wp\*Nx ≥ Wd,** il est possible de couvrir toute la largeur du document avec des pixmaps. Il n'y a donc pas besoin d'un mécanisme de permutation horizontal. La détermination du nombre et de la granularité des pixmaps est différente. Le trop plein de mémoire graphique disponible au niveau du défilement horizontal est affecté au défilement vertical. La largeur des pixmaps est alors la largeur maximum de création d'un pixmap dans un décodeur.

## Revendications

**1.** Procédé d'affichage d'un document (12) sur un écran de visualisation pouvant être soumis à une procédure de défilement, le procédé d'affichage comportant les étapes suivantes :

- une étape d'attribution au document d'une quantité de mémoire graphique pour créer une mémoire tampon pour la partie visible (11) du document et des zones les plus proches autour de la partie visible du document appelées bandes d'anticipation (10),
- une étape de calcul et de découpage en pixmaps (13) de la mémoire tampon en fonction de la taille en pixels de la partie visible et de la taille en pixels des bandes d'anticipation,
- une étape de positionnement relatif des pixmaps (13) par rapport au document complet (12) et à la partie visible dudit document,
- une étape de remplissage du contenu des pixmaps avec le contenu de la partie visible et des zones prochainement visibles du document en cas de défilement du document,
- détecter lorsque le document est soumis à une procédure d'affichage ou à un défilement, et
- lorsque le document est soumis à une procédure d'affichage ou à un défilement une étape de recopie du contenu des pixmaps, dans la fenêtre d'affichage, avec préalablement, si nécessaire, une étape forçant la mise à jour du contenu des pixmaps concernés par l'affichage si l'étape de remplissage précédente ne l'a pas terminée,
- et retour à l'étape de positionnement relatif des pixmaps par rapport au document complet en fonction de la nouvelle position de la partie visible,
**caractérisé en ce que** l'étape de calcul et de découpage de la mémoire tampon en pixmaps contient les étapes suivantes:
- l'étape d'effectuer les calculs suivants:

$$Wpmax = ((Mf * Wf) / (Hf * T))^{1/2} + 1 - (2\alpha + 1) \, Wf \; ,$$

et

$$Hpmax \ = ((Mf * Hf) \ / \ (Wf * T))^{1/2} + 1 - (2\alpha + 1) \ Hf$$

avec

Wpmax et Hpmax: largeur maximale et hauteur maximale en pixels d'un pixmap,

$\alpha$: une constante du moteur HTML, $0<\alpha\leq1$,

Wf et Hf: largeur et hauteur en pixels de la partie visible du document,

T: taille d'un pixel en octets,

Mf: quantité de mémoire graphique disponible pour les pixmaps associés au document et

- une étape consistant à sélectionner la largeur en pixels d'un pixmap Wp et la hauteur en pixels d'un pixmap Hp de façon à ce que Wp$\leq$Wpmax et Hp$\leq$Hpmax, et

- une étape consistant à déterminer Nx et Ny, à savoir le nombre de zones de pixmaps en largeur et en hauteur en utilisant les relations suivantes:

$$Wp * Nx = ((Mf * Wf) \ / \ (Hf * T))^{1/2},$$

et

$$Hp * Ny \ = ((Mf * Hf) \ / \ (Wf * T))^{1/2}$$

où:

Wp * Nx correspond à la largeur en pixels de la zone formée de la partie visible et des bandes d'anticipation, et
Hp * Ny correspond à la hauteur en pixels de la zone formée de la partie visible et des bandes d'anticipation.

2. Procédé selon la revendication 1, dans lequel les bandes d'anticipations (10) comportent au minimum une colonne de pixmaps à droite et à gauche de la fenêtre visible (11) ainsi qu'une ligne de pixmaps en bas et en haut, sauf dans le cas où la fenêtre visible (11) approche le bord du document (12).

3. Procédé selon la revendication 1, dans lequel les pixmaps (13) sont découpés en rectangles qui sont dessinés successivement à chaque appel d'une tache de fond.

4. Procédé selon la revendication 3, dans lequel la tache de fond a également pour fonction de construire les bandes d'anticipation (10).

5. Procédé selon la revendication 1, qui utilise un mécanisme de synchronisation permettant le forçage éventuel des données à afficher dans les pixmaps.

6. Utilisation du procédé selon l'une quelconque des revendications 1 à 5 dans un décodeur de télévision numérique.


**Patentansprüche**

1. Verfahren zur Anzeige eines Dokuments (12) auf einem Anzeigebildschirm, der einem Scrollvorgang unterzogen werden kann, wobei das Anzeigeverfahren die folgenden Schritte umfasst:

- einen Schritt des Zuteilens einer Grafikspeichermenge für das Dokument, um einen Pufferspeicher für den sichtbaren Teil (11) des Dokuments und Bereiche, die um den sichtbaren Teil des Dokuments am nächsten sind und als Vorschaustreifen (10) bezeichnet werden, zu erzeugen,
- einen Schritt des Berechnens und des Aufteilens des Pufferspeichers in Pixmaps (13) in Abhängigkeit von der Größe des sichtbaren Teils in Pixeln und der Größe der Vorschaustreifen in Pixeln,
- einen Schritt des relativen Positionierens der Pixmaps (13) in Bezug auf das vollständige Dokument (12) und den sichtbaren Teil des besagten Dokuments,
- einen Schritt des Auffüllens des Inhalts der Pixmaps mit dem Inhalt des sichtbaren Teils und in Kürze sichtbaren Bereichen des Dokuments im Fall eines Scrollens des Dokuments,

- Erfassen, wenn das Dokument einem Anzeigevorgang oder einem Scrollen unterzogen wird,
- wenn das Dokument einem Anzeigevorgang oder einem Scrollen unterzogen wird, einen Schritt des Kopierens des Inhalts der Pixmaps in dem Anzeigefenster, mit zuvor gegebenenfalls einem Schritt, der das Aktualisieren des Inhalts der Pixmaps erzwingt, die von der Anzeige betroffen sind, wenn der vorherige Schritt des Auffüllens nicht abgeschlossen wurde,
- und Zurückkehren zum Schritt des relativen Positionierens der Pixmaps in Bezug auf das vollständige Dokument in Abhängigkeit von der neuen Position des sichtbaren Teils,

**dadurch gekennzeichnet, dass** der Schritt des Berechnens und des Aufteilens des Pufferspeichers in Pixmaps die folgenden Schritte beinhaltet:

- den Schritt des Durchführens der folgenden Berechnungen:

$$\text{Wpmax} = ((\text{Mf} * \text{Wf}) / (\text{Hf} * \text{T}))^{1/2} + 1 - (2\alpha + 1)\ \text{Wf}$$

und

$$\text{Hpmax} = ((\text{Mf} * \text{Hf}) / (\text{Wf} * \text{T}))^{1/2} + 1 - (2\alpha + 1)\ \text{Hf,}$$

wobei
Wpmax und Hpmax: maximale Breite und maximale Höhe einer Pixmap in Pixeln,
$\alpha$ = eine Konstante der HTML-Maschine, $0 < \alpha < 1$,
Wf und Hf: Größe und Breite des sichtbaren Teils des Dokuments in Pixeln,
T: Größe eines Pixels in Oktetten,
Mf: für die mit dem Dokument in Verbindung stehenden Pixmaps verfügbare Grafikspeichermenge, und
- einen Schritt, der in dem Auswählen der Breite einer Pixmap in Pixeln Wp und der Höhe einer Pixmap in Pixeln Hp derart besteht, dass Wp $\leq$ Wpmax und Hp $\leq$ Hpmax, und
- einen Schritt, der in dem Bestimmen von Nx und Ny, nämlich der Anzahl von Bereichen der Pixmaps in Breite und Höhe besteht, indem die folgenden Gleichungen verwendet werden:

$$\text{Wp} * \text{Nx} = ((\text{Mf} * \text{Wf}) / (\text{Hf} * \text{T}))^{1/2}$$

und

$$\text{Hp} * \text{Ny} = ((\text{Mf} * \text{Hf}) / (\text{Wf} * \text{T}))^{1/2},$$

worin:

Wp * Nx der Breite des gebildeten Bereichs des sichtbaren Teils und der Vorschaustreifen in Pixeln entspricht und
Hp * Ny der Höhe des gebildeten Bereichs des sichtbaren Teils und der Vorschaustreifen in Pixeln entspricht.

2. Verfahren nach Anspruch 1, wobei die Vorausschaustreifen (10) mindestens eine Spalte von Pixmaps rechts und links des sichtbaren Fensters (11) sowie eine Zeile von Pixmaps unten und oben umfassen, außer wenn das sichtbare Fenster (11) dem Rand des Dokuments (12) näher kommt.

3. Verfahren nach Anspruch 1, wobei die Pixmaps (13) in Rechtecke aufgeteilt werden, die nacheinander mit jedem Aufruf einer Hintergrundaufgabe gezeichnet werden.

4. Verfahren nach Anspruch 3, wobei die Hintergrundaufgabe außerdem die Funktion des Erstellens der Vorausschaustreifen (10) aufweist.

5. Verfahren nach Anspruch 1, das einen Synchronisiermechanismus verwendet, der das etwaige Erzwingen des Anzeigens von Daten in den Pixmaps ermöglicht.

6. Verwendung des Verfahrens nach einem der Ansprüche 1 bis 5 in einem Digitalfernsehdecoder.

**Claims**

1. Method for displaying a document (12) on a display screen capable of being subjected to a scroll procedure, the display method comprising the following steps:

 - a step of allocating the document a quantity of graphics memory to create a buffer memory for the visible part (11) of the document and of the zones closest to the visible part of the document called anticipation bands (10),
 - a step of calculating and chopping the buffer memory into pixmaps (13) as a function of the size in pixels of the visible part and of the size in pixels of the anticipation bands,
 - a step of relative positioning of the pixmaps (13) with respect to the complete document (12) and the visible part of said document,
 - a step of filling the content of the pixmaps with the content of the visible part and of the zones of the document visible shortly in the case of scrolling of the document,
 - detecting when the document is subjected to a display procedure or a scrolling, and
 - when the document is subjected to a display procedure or to a scrolling a step of copying the content of the pixmaps, into the display window, with previously, if necessary, a step forcing the updating of the content of the pixmaps involved in the display if the previous step of filling has not terminated same,
 - and return to the step of relative positioning of the pixmaps with respect to the complete document as a function of the new position of the visible part,

 **characterised in that** the step of calculating and of chopping the buffer memory into pixmaps contains the following steps:

 - the step of carrying out the following calculations:

$$\text{Wpmax} = ((\text{Mf}^* \text{ Wf}) / (\text{Hf}^* \text{ T}))^{1/2} + 1 - (2\alpha + 1) \text{ Wf},$$

 and

$$\text{Hpmax} = ((\text{Mf}^* \text{ Hf}) / (\text{Wf}^* \text{ T}))^{1/2} + 1 - (2\alpha + 1) \text{ Hf}$$

 with
 Wpmax and Hpmax: maximum width and maximum height in pixels of a pixmap, $\alpha$: a constant of the HTML engine, $0 < \alpha \leq 1$,
 Wf and Hf: width and height in pixels of the visible part of the document,
 T: size of a pixel in bytes,
 Mf: quantity of graphics memory available for the pixmaps associated with the document and
 - a step consisting in selecting the width in pixels of a pixmap Wp and the height in pixels of a pixmap Hp so that Wp$\leq$Wpmax and Hp$\leq$Hpmax, and
 - a step consisting in determining Nx and Ny, namely the number of zones of pixmaps in width and height by using the following relationships:

$$\text{Wp} * \text{Nx} = ((\text{Mf}^* \text{ Wf}) / (\text{Hf}^* \text{ T}))^{1/2},$$

 and

$$Hp* Ny = ((Mf* Hf) / (Wf * T))^{1/2}$$

where:

Wp * Nx corresponds to the width in pixels of the zone formed by the visible part and the anticipation bands, and

Hp * Ny corresponds to the height in pixels of the zone formed by the visible part and the anticipation bands.

2. Method according to claim 1, wherein the anticipation bans (10) comprise a minimum of one column of pixmaps on the right and on the left of the visible window (11) as well as a row of pixmaps at the bottom and at the top, except in the case where the visible window (11) approaches the edge of the document (12).

3. Method according to claim 1, wherein the pixmaps (13) are chopped into rectangles which are drawn successively with each call of a background task.

4. Method according to claim 3, wherein the background task also has the function of constructing the anticipation bands (10).

5. Method according to claim 1, which uses a synchronisation mechanism allowing the possible forcing of the data to be displayed into the pixmaps.

6. Use of the method according to any one of claims 1 to 5 in a digital television decoder.

FIG. 1

FIG. 2

FIG. 3

FIG. 4

FIG. 5

FIG. 6

FIG. 7

## RÉFÉRENCES CITÉES DANS LA DESCRIPTION

**Documents brevets cités dans la description**

- EP 1164499 A
- US 4920504 A